# EUROPEAN PATENT SPECIFICATION

(11) **EP 2 224 824 B1**
(45) Date of publication and mention of the grant of the patent: **22.06.2016**
(21) Application number: 08861830.1
(22) Date of filing: 18.12.2008
(51) Int. Cl.: A23C 9/154, A23C 13/16, A23C 19/09, A23L 29/219

(54) **NOSA-MODIFIED STARCH AS AN ADDITIVE IN DAIRY PRODUCTS**
NOSA-MODIFIZIERTE STÄRKE ALS ZUSATZSTOFF IN MILCHPRODUKTEN
AMIDON MODIFIÉ AU NOSA EN TANT QU'ADDITIF DANS DES PRODUITS LAITIERS

(30) Priority: 18.12.2007 US 14657
(43) Date of publication of application: 08.09.2010
(73) Proprietor: Cargill, Incorporated, Wayzata, MN 55391 (US)
(72) Inventor: KLEMASZEWSKI, Joseph, Johns Creek GA 30022 (US)
(74) Representative: Haegeman, Christophe Dominique René
(86) International application number: PCT/US2008/013815
(87) International publication number: WO 2009/079002

(56) References cited:
- WO-A1-2007/063084
- US-A- 4 499 116
- US-A- 5 512 311
- US-A- 5 711 986
- US-A1- 2003 059 514
- DATABASE FSTA [Online] INTERNATIONAL FOOD INFORMATION SERVICE (IFIS), FRANkFURT-MAIN, DE; YING-LONG WU ET AL: "Study on the applications of OSA modified potato starch in ice cream.", XP002710438, Database accession no. FS-2007-12-Pn2896 & YING-LONG ET AL.: "Study on the applications of OSA modified potato starch in ice cream.", FOOD SCIENCE AND TECHNOLOGY, no. No. 10, 2006, pages 228-230, FOOD SCIENCE AND TECHNOLOGY 2006 DEP. OF FOOD SCI., SICHUAN AGRIC. UNIV., YA'AN 625014, CHINA
- NODA T ET AL: "Physicochemical properties and amylopectin structures of large, small, and extremely small potato starch granules", CARBOHYDRATE POLYMERS, APPLIED SCIENCE PUBLISHERS, LTD. BARKING, GB, vol. 60, no. 2, 6 May 2005 (2005-05-06), pages 245-251, XP027721516, ISSN: 0144-8617 [retrieved on 2005-05-06]
- JANE J L ET AL: "Internal structure of the potato starch granule revealed by chemical gelatinization", CARBOHYDRATE RESEARCH, PERGAMON, GB, vol. 247, 2 September 1993 (1993-09-02), pages 279-290, XP026622090, ISSN: 0008-6215, DOI: 10.1016/0008-6215(93)84260-D [retrieved on 1993-09-02]

## Description

### FIELD

This disclosure pertains to dairy products, in particular reduced-fat yoghurts, containing starch modified with n-octenyl succinic anhydride (nOSA) and the methods for making such dairy products.

### BACKGROUND

Starch is a carbohydrate polymer, which includes amylose and/or amylopectin. Amylopectin is the major component (about 70-80%) of most starches. Amylose is the minor component (about 20-30%) of most starches. However, there are high amylose starches with 50-70% amylose. Starches can be modified from its native state, for example, by enzymes, oxidation or, substitution with various compounds.

Modified starches are used in a variety of products including spreads, backed goods, ice creams and others. Examples of such disclosures are given in WO 2007/063084; US 5 711 986; US 5 512 311; Ying-Long Wu et al., Food Sci. & Tech., 10, 2006, 228-230; Noda et al., Carbohydrate Pol., Appl. Sci. Publishers, vol. 60, no. 2, 245-251; and Jane et al., Carbohydrate Res. 247, 1993, 279-290.

### SUMMARY

This disclosure provides methods of preparing reduced-fat yoghurts that include starch that has been modified by reaction with n-octenyl succinic anhydride (nOSA). The modified starch may be substituted for some or all of the fat or lipids in the yoghurt. Alternatively, the nOSA-modified starch may be used as an additive in the yoghurt. This disclosure also provides compositions of reduced-fat yoghurts that include starch that has been modified by reaction with nOSA.

The foregoing and other objects and features of the disclosure will become more apparent from the following detailed description.

### DETAILED DESCRIPTION

### I. Introduction

The present disclosure describes use of a modified starch in dairy products, in particular in reduced-fat yoghurts. The starch is one that is substituted with n-octenyl succinic anhydride (nOSA), and is also partially oxidized. The size of the nOSA starch granules useful for the disclosure is about 10 to 100 microns. In contrast, homogenized milkfat particles are about 0.2 to 2 microns. Unexpectedly, it was observed that these large nOSA starch granules can be substituted for much smaller homogenized milkfat particles in reduced-fat yoghurts with a resulting smooth texture and without significant loss in viscosity or creaminess. The modified starches can also be used as an additive to dairy products. Alternatively, modified starches can be substituted for some or all of the fat in reduced-fat yogurts (*e.g*., spoonable, drinkable, and frozen). The modified starch, in some examples, imparts increased viscosity and creaminess to the reduced-fat yoghurts. When substituted for some or all of the fat in the reduced-fat yoghurts, the modified starch can also result in a decreased caloric content of the resulting food product (*e.g.*, a reduction of at least 10%, or at least 50%).

### II. Abbreviations and Terms

The following explanations of terms and methods are provided to better describe the present disclosure and to guide those of ordinary skill in the art in the practice of the present disclosure. As used herein, "comprising" means "including" and the singular forms "a" or "an" or "the"' include plural references unless the context clearly dictates otherwise. The term "or"' refers to a single element of stated alternative elements or a combination of two or more elements, unless the context clearly indicates otherwise.

Unless explained otherwise, all technical and scientific terms used herein have the same meaning as commonly understood to one of ordinary skill in the art to which this disclosure belongs. Although methods and materials similar or equivalent to those described herein can be used in the practice or testing of the present disclosure, suitable methods and materials are described below. The materials, methods, and examples are illustrative only and not intended to be limiting. Other features of the disclosure are apparent from the following detailed description and the claims.

Definitions of common terms in chemistry may be found in Richard J. Lewis, Sr. (ed.), Hawley's Condensed Chemical Dictionary, published by John Wiley & Sons, Inc., 1997 (ISBN 0-471-29205-2).

In order to facilitate review of the various embodiments of the disclosure, the following explanations of specific terms are provided:

**Additive:** Any substance added to a base material in low concentrations for a definite purpose. In the United States, the Food and Drug Administration sets the allowable levels of food additives after evaluating the safety and toxicity of the additive. Additives may be essential to the existence of the end product, such as the use of emulsifiers in mayonnaise or leavening agents in bread products. Alternatively, additives may perform a secondary function. For example, additives may function as thickeners, flavoring agents, or coloring agents. The nOSA starches described herein are used as additives in dairy products. In some examples, nOSA starches used in the dairy products provided herein do not contain more than 3% octenyl succinic anhydride, for example as per 21 C.F.R. § 172.892(d).

**Cheese:** A food prepared from the pressed curd of milk, often seasoned and aged.

**Dairy product:** Milk or any food product prepared from milk (*e.g*., cow milk, goat milk, and soy milk), including butter, cheese, ice cream, pudding, sour cream, yogurt (*e.g*., spoonable, drinkable, and frozen), and dried and condensed milk. Products manufactured with soy milk and soy-based products also can be used in the examples described herein.

**Fat:** An ester of glycerol and three fatty acids. A fatty acid is a carboxylic acid having a carbon chain from 4-22 carbon atoms in length and usually having an even number of carbon atoms in the chain. The fatty acids can be saturated, *i.e.*, containing no double bonds, or unsaturated, *i.e.*, containing one or more double bonds. Fats can be found both in animal products and in some plant products.

**Lipid** is a term describing both fats and fat-derived materials. In some of the examples herein, some or all of the fat in dairy or soy products can be substituted with nOSA-modified starch. In some embodiments, some or all of the lipids in fat or soy products can be substituted with nOSA-modified starch.

**Ice cream:** A smooth, sweet, cold food prepared from a frozen mixture of milk products and flavorings, which in the United States contains a minimum of 10% milkfat and 10% nonfat milk solids (see, 21 C.F.R. § 135.110). However, the disclosure is not limited to this specific range, as the required percentages of milkfat and nonfat milk solids in ice creams can vary in other countries or jurisdictions.

**Mouthfeel:** Mouthfeel is a product's physical and chemical interaction in the mouth. Mouthfeel is a concept related to testing and evaluation of food products. It is a result of information relayed by sensors reporting taste, smell and tactile sensations. Foods are evaluated from initial perception through chewing and swallowing. Factors that are assessed include, among others, adhesiveness, chewiness, coarseness, denseness, dryness, graininess, hardness, heaviness, moisture absorption or release, mouth coating, slipperiness, smoothness, uniformity, viscosity, and wetness. For example, fat coats the inside of the mouth in a way that fat-free products do not, thus resulting in consumer dissatisfaction with some fat-free products.

**nOSA:** N-octenyl succinic anhydride. A reagent that can be used to modify a starch. Treatment of starch with nOSA results in a starch that has both hydrophilic and hydrophobic moieties. The resulting nOSA starch can be used as a fat mimetic as described herein. In food products that contain fat (such as some dairy products), the nOSA starch can also aid in emulsification. An exemplary nOSA starch fragment is shown below:

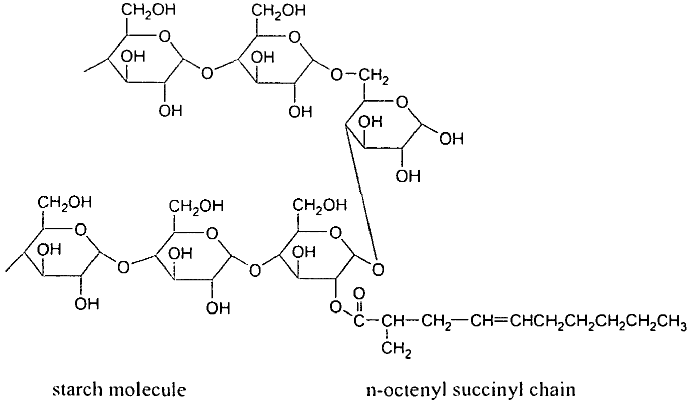

**Starch:** A starch is a carbohydrate polymer. Starches consist essentially of **amylose** and/or **amylopectin** and are typically in the form of granules. Amylopectin is the major component (about 70-80%) of most starches. It is found in the outer portion of starch granules and is a branched polymer of several thousand to several hundred thousand glucose units. Amylose is the minor component (about 20-30%) of most starches. However, there are high amylose starches with 50-70% amylose. Amylose is found in the inner portion of starch granules and is a linear glucose polymer of several hundred to several thousand glucose units.

Sources of starch include but are not limited to fruits, seeds, and rhizomes or tubers of plants. Common sources of starch include but are not limited to rice, wheat, corn, potatoes, tapioca, arrowroot, buckwheat, banana, barley, cassava, kudzu, oca, sago, sorghum, sweet potatoes, taro and yams. Edible beans, such as favas, lentils and peas, are also rich in starch.

Some starches are classified as **waxy starches**. A waxy starch consists essentially of amylopectin. Common waxy starches include waxy maize starch, waxy corn starch, and waxy wheat starch.

An **instant starch** is one that swells and develops increased viscosity in solution without heating. Instant starches are used, for example, in instant puddings.

A **modified starch** has a structure that has been altered from its native state, resulting in modification of one or more of its chemical or physical properties. Starches may be modified, for example, by enzymes, oxidation or substitution with various compounds. For example, starches can be modified to increase stability against heat, acids, or freezing, improve texture, increase or decrease viscosity, increase or decrease gelatinization times, and/or increase or decrease solubility, among others. Modified starches may be partially or completely degraded into shorter chains or glucose molecules. Amylopectin may be debranched. In one example, modified starches are cross-linked for example to improve stability. Starches that are modified by substitution have a different chemical composition. A **nOSA starch** is a modified starch that has been partially substituted, *e.g*., from about 0.1% to about 3%, with n-octenyl succinic anhydride.

**Sour Cream:** The food resulting from the souring, by acidification or lactic acid producing bacteria, of cream.

**Substitution:** The act, process, or result of replacing one thing with another. Substitution may refer, for example, to the substitution of starch for fat in a food product, such as a dairy product. Substitution may alternatively refer to the replacement of one functional group in a molecule by another as a result of a chemical reaction. For example, n-octenyl succinic anhydride may be used in a substitution reaction with starch to produce a nOSA-modified starch.

**Yogurt:** The food produced by culturing cream, milk, partially skimmed milk, or skim milk with a characterizing bacterial culture that contains lactic acid-producing bacteria, such as *Lactobacillus delbrueckii ssp.* and *Streptococcus thermophilus.* Exemplary yogurts include, but are not limited to, spoonable yogurt, yogurt dip, frozen yogurt, and drinkable yogurt.

### III. Methods of Preparing Dairy Products with nOSA-Modified Starches

Methods are provided for making dairy products that include nOSA-modified starches. Methods known to those skilled in the art can be used to make the dairy products. In some embodiments, the nOSA starch substitutes for some or all of the fat in the dairy product. In other embodiments, the nOSA starch can substitute for some or all of the lipids in the dairy product. In other embodiments, the nOSA starch is used as an additive to a dairy product. One skilled in the art will appreciate that dairy-like products can be made with vegetable fat (*e.g,* soy) instead of or in addition to animal fat (*e.g.*, cow's milk). Therefore, nOSA-modified starches can be used in soy-based products using methods similar to those described herein for traditional dairy products.

### A. Formulation of Dairy Products with nOSA-Modified Starches

Described herein are methods of making dairy products that include nOSA-modified starches, as well as products made from these processes. In some embodiments, nOSA-modified starches substitutes for some or all of the fat in the dairy or products. In other embodiments, nOSA-modified starches can substitute for some or all of the lipids in the dairy products. In some embodiments, nOSA-modified starches are added to the dairy products without concomitant reduction or omission of fat.

Dairy products are prepared using methods known to those skilled in the art, except that nOSA starch is added. A nOSA starch can be added at one of several points during manufacture. In some examples, a nOSA starch is added to the milk prior to pasteurization. Alternatively, it can be prepared as a solution (*e.g*., aqueous solution) with or without other ingredients and then added to the milk. In cases where an instant starch is suitable, *e.g*., for instant puddings, a nOSA-modified instant starch can be added after heating. In other embodiments, the nOSA starch can be added as part of another ingredient, such as when adding fruit to yogurt. In the specific examples described herein, nOSA starches are added to the milk prior to pasteurization, but the disclosure is not limited to addition prior to pasteurization.

The nOSA starch can be used to substitute some or all of the fat in the dairy or product, for example, at least 5%, at least 10%, at least 20%, at least 50%, at least 75%, or even at least 100% of the fat can be replaced or substituted with nOSA starch. In some examples, 20-100%, 30-70%, or 40-60% of the fat in a typical dairy product is substituted with a nOSA starch. In some embodiments, the nOSA starch can be used to substitute some or all of the lipids in the dairy product. In a specific example, for example in pourable dairy products, the upper limit for nOSA starch added to the dairy product is about 10 wt%, as higher levels may result in difficulty with processing the dairy products due to high viscosity. In solid dairy products, such as nonfat processed cheese, nOSA starch may be added to levels exceeding 25 wt%. As described in the examples herein, the nOSA starch may be added to give a final concentration in the dairy product of up to about 25 wt% nOSA starch, up to 10 wt% nOSA starch, up to 5 wt% nOSA starch or up to 1 wt% nOSA starch, such as, for example, 0.01-25 wt%, 0.5-10 wt%, or 0.6-5 wt% nOSA starch.

Replacing some or all of the fat with nOSA starch can lower the caloric content of the dairy product, *e.g*., replacing half of the fat in sour cream with a nOSA starch can lower the caloric content by about one-third. Therefore, in some examples substitution of some or all of the fat in a dairy product (*e.g*., yogurt or sour cream) with a nOSA starch can reduce the caloric content (relative to the same product without nOSA starch) by at least 10%, at least 20%, at least 30%, at least 50%, or at least 75%, such as 10 - 33%, 10 - 50%, or 33 - 70%. Similarly, replacing all of the fat in yogurt with nOSA starch can reduce the caloric content, such as by at least 5%, at least 10%, at least 20%, or even at least 50%, for example by about 5-70%, 5-20%, 10-50%, or 30-40%, depending on the type of yogurt.

In some examples, addition of a nOSA starch to a dairy product can also function to increase the viscosity of the dairy product. For example, addition of 2% nOSA starch to a yogurt composition resulted in 50% higher viscosity than the addition of 2% maltodextrin to the same composition. The nOSA starch can be used to increase viscosity in place of other viscosifying starches. Alternatively, it can be used in conjunction with other viscosifying starches. Therefore, in some examples inclusion of a nOSA starch in a dairy product (*e.g.*, yogurt or sour cream) increases the viscosity of the dairy product (relative to the same product without nOSA starch) by at least 5%, at least 10%, at least 20%, at least 30%, at least 50%, or at least 75%, such as 10 - 20%, 10 - 50%, or 30 - 70%.

In some examples, nOSA starch is added to a dairy product without any substantial reduction in the fat or lipid content, but with a resulting product having an improved texture. For example, nOSA starch can be added to a spoonable yogurt or similar dairy product (*e.g*., pudding) at a concentration of up to 5 wt%, such as from 0.01-5 wt%, 0.5-5 wt%, or 0.5-1.5 wt%. The resulting yogurt has a creamier and smoother texture. The creaminess is similar to that obtained by adding more fat to the yogurt, but for example without a substantial increase in calories. The resulting yogurt is also smoother with fewer apparent curds and a more pudding-like texture.

Methods of making dairy products are known in the art. For example, dairy products generally contain nonfat milk solids, milkfat, water, and additional components including but not limited to bacterial cultures, flavorings, sweeteners, gelatin, gums, and starches, among others. Nonfat dairy products typically contain little to no milkfat, *e.g*., less than 0.5 gram milkfat per serving. A "nonfat" sour cream may contain up to 1.5% fat. Whole milk, low-fat milk, or nonfat animal milks, as well as soy milk, may be used to make dairy products. Alternatively, dried nonfat milk solids and dried milkfat may be used. If milk is used, it may be pasteurized to denature enzymes that are present and kill any unwanted microorganisms. Pasteurization typically involves heating the milk, for example to 63 °C for 30 minutes, 72 °C for 15 seconds, or 89 °C for 1 second. In dairy products that include nOSA starch, the nOSA starch can be added to the milk prior to pasteurization. Alternatively, the nOSA starch can be: prepared in solution with or without other ingredients and added to the milk; added after heating (instant starch); or added with another ingredient, such as fruit in stirred yogurt.

In one embodiment, reduced-fat yogurts are prepared wherein blends of starch that include nOSA starch are used in place of some of the milkfat found in full-fat versions of yogurt. For example, the nOSA starch can be used to reduce the caloric content of the yogurt by up to about 50%, such as by at least 5%, at least 10%, at least 20%, for example by about 5-20%, 10-50%, or 30-40%. The nOSA starch can also increase the viscosity of the yogurt by up to 50%, such as by at least 5%, at least 10%, at least 20%, for example by about 5-20%, 10-50%, or 30-40%. The nOSA starch has also been found to enhance mouthfeel of the yogurt, *i.e.*, to produce a smoother texture and increased creaminess. For example, nOSA starch may be added to a spoonable yogurt to a final concentration of up to 5 wt%, such as from 0.01-5 wt%, 0.5-5 wt%, or 0.5-1.5 wt%.

By definition in 21 C.F.R. § 131.200, regular yogurt in the United States has a milkfat content of at least 3.25%. The fat content of regular yogurts typically ranges from 3.25% to about 3.8%, although there are yogurts on the market with a fat content of about 10%. As defined in 21 C.F.R. § 13 1.203, in the United States low-fat yogurts have not less than 0.5% milkfat and not more than 2% milkfat. A nonfat yogurt has less than 0.5% milkfat in the United States as defined in 21 C.F.R. § 131.206. However, other ranges maybe observed in other countries.

In one example, reduced-fat yogurts are formulated in which a nOSA starch substitutes for up to 100% of the milkfat, at least 20% of the milkfat, or about 40-50% of the milkfat. The nOSA starch can reduce the caloric content of the yogurt, increase its viscosity, enhance its mouthfeel and texture, or combinations thereof. For example, a nOSA-modified waxy maize starch, a nOSA-modified tapioca starch, a nOSA-modified corn starch, or a nOSA-modified potato starch, among others, can be used. In some examples, the resulting reduced-fat yogurts have a fat content of less than about 2 wt%. The reduced-fat yogurts made with the nOSA starch can be formulated and processed to have similar viscosity to a full-fat yogurt. These reduced-fat yogurts also can have a smoother texture than full-fat yogurts or other reduced-fat yogurts produced without nOSA starch. However, in some examples, use of an oxidized nOSA-modified waxy maize starch may result in undesirable off-flavors. The flavor of oxidized nOSA-modified corn starch may also result in a less desirable flavor than its non-oxidized counterpart. Therefore, in some examples, the nOSA starch used in the methods and dairy products disclosed herein are not oxidized.

In another embodiment, yogurts are prepared with a blend of starches containing nOSA-modified starch, such as a nOSA-modified tapioca starch. Nonfat and reduced-fat yogurts are formulated in which the usual compositions of nonfat and reduced-fat yogurt are altered only by the addition of a nOSA starch. The nOSA starch can be added to increase the viscosity of the yogurt and to enhance its mouthfeel and texture. In some examples, nOSA-modified starches are used in combination with other starches. In specific examples, the prepared yogurts include no more than 5 wt% nOSA starch, such as from about 0.5 wt% to about 3 wt% of nOSA-modified tapioca starch.

Viscosity targets can be met by a number of combinations and levels with nOSA-modified starches. For example, yogurts or other dairy products containing nOSA starches may have the same or similar viscosity as a full-fat yogurt (or other full-fat dairy products). The viscosity can be adjusted to be thinner or thicker by varying the amount of nOSA starch added to the yogurt. Smooth and creamy yogurts can be made with nOSA starches alone or in combination with single or multiple viscosifying starches, which may or may not be chemically modified with substitutions other than n-octenyl succinic anhydride.

In some examples, smooth and creamy yogurts were made containing about 0.5-3 wt% nOSA-modified waxy maize starch combined with about 0.5-2 wt% each of a modified waxy maize viscosifying starch and an unmodified viscosifying tapioca starch. In other examples, smooth and creamy yogurts were made using about 0.5-3 wt% nOSA-modified tapioca starch combined with about 0.5-2 wt% each of viscosifying starches from modified waxy maize starch, modified dent com, and modified tapioca starch. It was found that yogurts (e.g., spoonable yogurts) formulated with nOSA-modified tapioca starch demonstrated a significant flavor improvement with a "cleaner" flavor than yogurts formulated with the corn- based counterpart.

In another example, nOSA starch can be added to a yogurt dip containing about 9 wt% fat. Addition of the nOSA starch to the dip results in a thicker viscosity and a smoother and creamier texture than a yogurt dip without nOSA starch.

### B. Dairy Products

Dairy products are generally defined as milk and food products prepared from milk. Milk is approximately 87% water and 13% solids. The solids comprise about 3.7% fat and 9% nonfat milk solids. The exact composition of milk varies based on a number of factors, including breed, nutrition, and environment. Analogous dairy-like products also can be prepared from non-animal milk, such as soy milk.

In particular examples, dairy products have in common the presence of nonfat milk solids. The percentage of nonfat milk solids in dairy products typically ranges from about 2 wt% up to about 40 wt%. Whole, low-fat and skim milks typically contain about 8.25 wt% nonfat milk solids. Yogurts typically contain at least 8.25 wt% nonfat milk solids. Condensed milk may be used in the manufacture of yogurt to increase the percentage of nonfat milk solids in the final product. Sour cream typically contains from about 4-10 wt% nonfat milk solids. Nonfat powdered milk may contain about 95 wt% nonfat milk solids. The other major components in many dairy products are water and milkfat. Nonfat dairy products contain little or no milkfat. Dairy products may contain many additional components, including but not limited to sucrose and/or high fructose corn syrup, gelatin, bacterial cultures, preservatives, color enhancers, flavor enhancers, and emulsifiers, among others. Exemplary dairy products include but are not limited to butter, cheese, cream, ice cream, sour cream, yogurt, and dried and condensed milk.

### C. Preparation of nOSA-Modified Starch

Waxy starches and root or tuber starches normally suffer from a pronounced viscosity breakdown during prolonged heating due to degradation and partial depolymerization of the starch granules. Partially oxidizing the starch with hypochlorite and reacting it with n-octenyl succinic anhydride to form a nOSA starch results in a starch with improved heat and shear stability. Treatment with hypochlorite introduces intermolecular bridges or cross-links within the starch granules. Treatment with n-octenyl succinic anhydride results in a substituted starch molecule that has both hydrophilic and hydrophobic moieties.

The methods for oxidizing the starch with hypochlorite and reacting it with n-octenyl succinic anhydride are described briefly herein. In some examples, the starch is reacted with n-octenyl succinic anhydride but is not oxidized.

In particular examples the starches used in the present disclosure are partially oxidized by reaction with hypochlorite, for example, in the form of the sodium or calcium salt, corresponding to 100-4000 ppm active chlorine, such as 500-2000 ppm, at a pH which is between 7.5 and 11.5, such as between 8.5 and 10.5. In general the reaction conditions (chlorine level, time, temperature, pH) are controlled in such a way that no substantial starch degradation and no substantial formation of carboxyl groups (<0.1%) occur. Typical reaction times and temperatures are between 0.25 to 5 hours and between 10 °C and 55 °C respectively.

In one example, a partially oxidized, nOSA-substituted waxy maize starch can be prepared as follows: 2 kg of native waxy maize starch (Cerestar 04201) are slurried in 3 L of tap water. The suspension is heated to 30 °C and the pH is adjusted to 10.5. To this slurry, sodium hypochlorite is added in an amount corresponding to 1000 ppm of active chlorine. Under steady stirring the reaction is allowed to proceed for about 1-5 hours. After the reaction, the pH is brought to about 6 and excess chlorine is neutralized with sodium bisulfite. The partially oxidized starch is then washed with water and dried to about 10-15% moisture. A similar reaction can be performed at pH 8.5 for tapioca starch. The mild oxidation conditions described result in cross-linking within starch molecules and a corresponding increase in heat and shear stability. The size of the starch granules is unchanged at about 10-100 microns. The more stringent oxidation conditions typically described in the prior art cause depolymerization of the starch molecules and a smaller granule.

When the oxidation reaction is carried out in combination with a chemical modification such as n-octenylsuccinylation, the treatment with hypochlorite can occur before, during or after the chemical modification reaction. For example, before or after treatment with hypochlorite, the starch is treated with 3% n-octenyl succinic anhydride at 30 °C and pH 8.5 for about one hour. As shown below in Eq. 1, the reaction with n-octenyl succinic anhydride produces a substituted starch (nOSA starch).

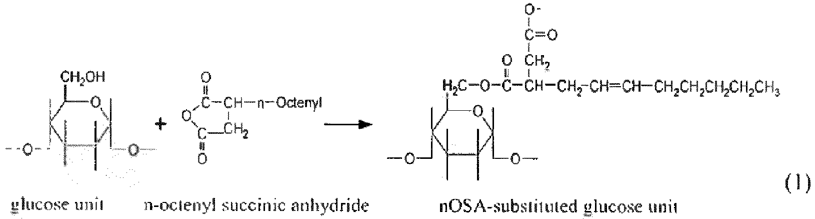

For use in food products, in the United States 21 C.F.R. § 172.892(d) limits the degree of substitution with n-octenyl succinic anhydride to 3%. However, higher levels of substitution may be used in dairy products in other countries. Substitution with nOSA does not significantly affect the size of the starch granules. The glucose subunits within the starch molecule are hydrophilic and soluble in aqueous solutions. The n-octenyl succinate chains are hydrophobic and lipophilic, *i.e.*, fat soluble. Thus, the nOSA starch also has properties similar to a fat and can be used as a fat substitute.

The nOSA starches used in accordance with the invention have been partially oxidized with hypochlorite and substituted with n-octenyl succinic anhydride to a maximum substitution of 3%. The nOSA-modified starch molecules retain their branched nature and form granules that are about 10-100 microns in diameter. The specific nOSA starches used in the examples below are commercially available and are manufactured by Cargill, Inc., based in Minneapolis, Minnesota.

### D. Exemplary Methods of Making Dairy Products

Exemplary methods of making dairy products are described in general terms. One skilled in the art will appreciate that other known methods for making dairy products (e.g., those that include cow's milk or soy milk) can be utilized without significant alterations to the final product.

In general, yogurt is a fermented milk product. The milk may be whole milk, low-fat milk, or nonfat milk, or even soy milk. The amount of nonfat milk solids and fat in the milk may be adjusted to desired concentrations by the addition of nonfat dry milk or by adding additional milkfat to the milk. Stabilizers and gums may be added to the milk to improve viscosity and texture of the final product. The milk may also be concentrated by evaporation to produce a thicker yogurt. Alternatively, the starting milk can also be formulated from dried nonfat milk solids, concentrated or anhydrous milkfat, and water. Production of yogurt typically starts with heating the milk base to about 85-90 °C for about 2-5 minutes to denature enzymes present in the milk and kill unwanted microorganisms that might be present. Other temperatures and times may be utilized as outlined in 21 C.F.R. § 131.3(b). The milk is then cooled to about 40-50 °C and is subsequently inoculated with *Streptococcus thermophilus* and *Lactobacillus clelbrueckii ssp.* cultures or other safe and suitable cultures such as probiotic cultures. The milk is then held at a temperature of about 37-47 °C for about 3-6 hours. At this temperature, the *Streptococcus thermophilus* grows and rapidly ferments lactose (milk sugar) to lactic acid. As lactic acid forms, the pH of the milk drops. Bovine milk initially has a pH of about 6.6. As the pH decreases to about 4.6, casein, a protein present in milk, begins to coagulate and fonn a semisolid curd. This process is allowed to continue until the coagulated milk reaches the desired consistency. When the desired consistency has been achieved, the temperature of the yogurt is reduced by refrigeration. As the yogurt cools, the growth of the *Streptococcus thermophilus* slows and the *Lactobacillus de*/*bnoeckii ssp.* begins to ferment the remaining lactose in the milk at a faster rate. Activity of the *Lactobacillus delbrueckii ssp.* significantly slows when the temperature drops below 10 °C. The prepared yogurt is then typically stored at about 4 °C.
When making a yogurt that includes a nOSA starch, the nOSA starch may be added to the milk prior to pasteurization.

### IV. Compositions

In the non-limiting examples discussed below, dairy product compositions are provided that include nOSA starches and have a fat content of about 0-30 wt%. As discussed herein, dairy products include those made with typical animal milk products, or vegetable milk products (such as soy). In some examples, these dairy products include no more than about 25 wt% nOSA starch, such as about 0.01 to about 25 wt% nOSA starch. Compositions that include higher amounts of nOSA starch and/or higher levels of milkfat also can be produced within the scope of this disclosure. For example, pasteurized process cheeses typically have a milkfat content greater than 25%. In solid dairy products, *e.g*., cheeses, the amount of nOSA starch added may exceed 25 wt%.

In accordance with the invention, the dairy product is a yogurt, reduced-fat yogurt, low-fat yogurt, or nonfat yogurt that includes a nOSA starch. Suitable nOSA starches for use in yogurts are nOSA-modified waxy maize starch and nOSA-modified tapioca starch, among others. The nOSA starch may be used to substitute for some or all of the fat in the yogurt composition. Alternatively, the nOSA starch may be used as an additive in the yogurt to increase its viscosity, improve its texture, enhance its mouthfeel, and/or impart additional creaminess. The nOSA-containing yogurts can include from 0 wt% to a final concentration of no more than 5 wt% nOSA starch, such as from 0.1-5 wt%, 0.5-3 wt%, or 0.6-1.5 wt% of nOSA starch.

### V. Examples

### Example 1: Reduced-Fat Yogurt with nOSA-Modified Waxy Maize Starch

This example describes methods used to reduce fat or lipids in a yogurt product. One skilled in the art will appreciate that minor changes to the method can be made without significant alterations to the final product. A control yogurt and a reduced-fat yogurt were prepared with the following compositions:

| Control Yogurt | |
|---|---|
| Milk solids nonfat' | 8.5% |
| Milkfat² | 3.5% |
| Sucrose and/or high fructose corn syrup | 0.10% |
| Viscosifying starch(es)' | 2.0% |
| Gelatin | 0.3% |
| Other ingredients (culture, preservatives) | <1% |
| Moisture | Balance to 100% |

| Reduced-Fat Yogurt | |
|---|---|
| Milk solids nonfat¹ | 8.5% |
| Milkfat² | 2.0% |
| Sucrose and/or high fructose corn syrup | 0-10% |
| Viscosifying starch(es)³ | 2.0% |
| nOSA starch⁴ | 1.0% |
| Gelatin | 0.3% |
| Other ingredients (cultures, preservatives) | <1% |
| Moisture | Balance to 100% |

| | |
|---|---|
| ¹ From milk, cream, nonfat milk, concentrate milk, whey protein concentrate, or nonfat dry milk ² From milk, cream, butter, or anhydrous milkfat ³ Native and/or modified starches added primarily for viscosity ⁴ EmTex™ 06328 - oxidized and nOSA-substituted waxy maize starch | |

The control and reduced-fat plain yogurts were prepared by adding the ingredients to standardized milk, preheating the mix to 140 °F, homogenizing at 1000 psi, pasteurizing at 190- 200 °F for four minutes, and cooling to 104-108 °F. The mix was then inoculated with yogurt cultures and incubated at 104-108 °F until pH 4.60 to 4.65 was reached. The yogurt white mass was then stirred, cooled to 50-80 °F, and pumped through a screen and back pressure valve for smoothing. The white mass, optionally combined with a fruit preparation, was then packaged and refrigerated.

Using microscopy, starch granules from 20-60 microns in diameter were observed in the yogurts. The reduced-fat yogurt was compared to the control yogurt for the following properties: viscosity, mouthfeel, flavor, and appearance. Viscosity was measured using a constant stress rheometer (Anton Parr MCR-301). The samples were loaded into a concentric cylinder measurement cell and equilibrated to 20 °C. A flow curve was generated by increasing the shear rate from 0.1 sec'¹ to 100 sec"¹ and plotting the measured apparent viscosity versus shear rate. The apparent viscosity over the range of shear rates (0.1 to 100 sec'¹) was similar for the control and reduced-fat yogurts. Similar mouthfeel was observed in these samples, but the sheen and smoothness of the reduced-fat yogurt were deemed superior to the control.

### Example 2:

### Reduced-fat and Nonfat Yogurt with nOSA-Modified Tapioca Starch

This example describes methods used to prepare a reduced-fat or nonfat yogurt product with the addition of nOSA-modified tapioca starch. One skilled in the art will appreciate that minor changes to the method can be made without significant alterations to the final product. A control low-fat yogurt, a control nonfat yogurt, a low-fat yogurt, and a nonfat yogurt were prepared with the following compositions:

| Control Low-fat Yogurt | |
|---|---|
| Milk solids nonfat¹ | 8.5% |
| Mllkfat² | 1.0% |
| Sucrose and/or high fructose corn syrup | 0-10% |
| Viscosifying starch(es)³ | 2.5% |
| Gelatin | 0.3% |
| Other ingredients (cultures, preservatives) | <1% |
| Moisture | Balance to 100% |

| Control Nonfat Yogurt | |
|---|---|
| Milk solids nonfat¹ | 9.0% |
| Milkfat² | <0.2% |
| Sucrose and/or high fructose corn syrup | 0-10% |
| Viscosifying starch(es)³ | 2.5% |
| Gelatin | 0.3% |
| Other ingredients (cultures, preservatives) | <1% |
| Moisture | Balance to 100% |

| Low-fat Yogurt | |
|---|---|
| Milk solids nonfat¹ | 8.5% |
| Milkfat² | 1.0% |
| Sucrose and/or high fructose corn syrup | 0-10% |
| Viscosifying starch(es)³ | 2.4% |
| nOSA starch⁴ | 0.8% |
| Gelatin | 0.3% |
| Other ingredients (cultures, preservatives) | <1% |
| Moisture | Balance to 100% |

| Nonfat Yogurt | |
|---|---|
| Milk solids nonfat¹ | 9.0% |
| Milkfat² | <0.2% |
| Sucrose and/or high fructose corn syrup | 0-10% |
| Viscosifying starch(es)³ | 2.4% |
| nOSA starch⁴ | 0.8% |
| Gelatin | 0.3% |
| Other ingredients (cultures, preservatives) | <1% |
| Moisture | Balance to 100% |

| | |
|---|---|
| ¹ From milk, cream, nonfat milk, concentrate milk, whey protein concentrate, or nonfat dry milk ² From milk, cream, butter, or anhydrous milkfat ³ Native and/or modified starches added primarily for viscosity ⁴ DeliTex™ 75320 - oxidized and nOSA-substituted tapioca | |

The control and modified yogurts were prepared by mixing the ingredients, preheating the mix to 140 °F, homogenizing at 1000 psi, pasteurizing at 190-200 °F for four minutes, and cooling to 104-108 °F. The mix was then inoculated with yogurt cultures and incubated at 104- 108 °F until pH 4.60 to 4.65 was reached. The yogurt white mass was then stirred, cooled to 50- 80 °F, and pumped through a screen and back pressure valve for smoothing. The white mass was then packaged and refrigerated.

The low-fat and nonfat yogurts with added nOSA-modified tapioca starch were compared to the control low-fat and nonfat yogurts for the following properties: viscosity, mouthfeel, flavor, and appearance. The viscosity over a range of shear rates was similar for the control and reduced-fat yogurts. Similar mouthfeel was observed in these samples, but the sheen and smoothness of the yogurts made with the nOSA starches were deemed superior to the control.

## Claims

1. A method of preparing a reduced-fat yoghurt, comprising formulating said yoghurt such that it includes a starch; wherein the starch is partially oxidized with hypochlorite and modified by reaction with n-octenyl succinic anhydride to a maximum substitution of 3%, and wherein the n-octenyl succinic anhydride modified starch molecules retain their branched nature and form granules that are 10-100 microns in diameter.

2. The method of claim 1, wherein the modified starch comprises waxy maze starch, com starch, tapioca starch, potato starch, or a combination thereof.

3. The method of claim 1, wherein said yoghurt includes fat and at least 20 wt% of the fat is substituted with the modified starch.

4. The method of claim 1, wherein up to 100 wt% of the fat in the said yoghurt is substituted with the modified starch.

5. A composition comprising a reduced-fat yoghurt and a starch which is partially oxidized with hypochlorite and modified by reaction with n-octenyl succinic anhydride to a maximum substitution of 3%, and wherein the n-octenyl succinic anhydride modified starch molecules retain their branched nature and form granules that are 10-100 microns in diameter, wherein the composition comprises 0 to 20 wt% of fat.

6. The composition of claim 5, wherein the modified starch comprises tapioca starch, com starch, potato starch, or a combination thereof

7. The composition of claim 5, wherein the composition comprises 0 to 10 wt% of fat and 0.01 to 10 wt% of modified tapioca starch.

## Patentansprüche

1. Eine Methode zur Herstellung eines fett- reduzierten Joghurts, einschließlich einer Rezeptur dieses Joghurts, nach der er Stärke enthält, wobei die Stärke teilweise mit Hypochlorit oxidiert und durch Reaktion mit n- Octenyl- Bernsteinsäureanhydrid modifiziert ist zu einer Substitution von maximal 3 % und wobei die mit n-Octenyl- Bernsteinsäureanhydrid modifizierten Stärkemoleküle ihre verzweigte Natur behalten und Körner mit einem Durchmesser von 10- 100 Mikron bilden.

2. Die Methode nach Anspruch 1, wobei die modifizierte Stärke Wachsmaisstärke, Maisstärke, Tapiokastärke, Kartoffelstärke oder Kombinationen daraus enthält.

3. Die Methode nach Anspruch 1 wobei dieser Joghurt Fett enthält und mindestens 20 Gew.- % des Fettes durch die modifizierte Stärke ersetzt werden.

4. Die Methode nach Anspruch 1, wobei bis zu 100 Gew. % des Fettes in diesem Joghurt durch die modifizierte Stärke ersetzt werden.

5. Eine Zusammensetzung, die einen fettreduzierten Joghurt und eine Stärke enthält, die teilweise mit Hypochlorit oxidiert ist und durch Reaktion mit n- Octenyl- Bernsteinsäureanhydrid zu einer Substitution von maximal 3 % modifiziert ist und wobei die mit n-Octenyl- Bernsteinsäureanhydrid modifizierten Stärkemoleküle ihre verzweigte Natur behalten und Körner mit einem Durchmesser von 10- 100 Mikron bilden, wobei die Zusammensetzung 0 bis 20 Gew. % Fett enthält.

6. Die Zusammensetzung nach Anspruch 5, wobei die modifizierte Stärke Maisstärke, Tapiokastärke, Kartoffelstärke oder Kombinationen daraus, enthält.

7. Die Zusammensetzung nach Anspruch 5, wobei die die Zusammensetzung 0 bis 10 Gew. % Fett und 0,01 bis 10 Gew. % modifizierter Tapiokastärke enthält.

## Revendications

1. Procédé de préparation d'un yaourt à teneur réduite en gras, comprenant la formulation dudit yaourt de sorte qu'elle inclut un amidon ; dans lequel l'amidon est partiellement oxydé avec de l'hypochlorite et modifié par réaction avec de l'anhydride n-octényl-succinique à une substitution maximale de 3 %, et dans lequel les molécules d'amidon modifiées à l'anhydride n-octényl-succinique conservent leur nature ramifiée et forment des granules qui font 10 à 100 microns de diamètre.

2. Procédé selon la revendication 1, dans lequel l'amidon modifié comprend de l'amidon de maïs cireux, de l'amidon de maïs, de l'amidon de tapioca, de l'amidon de pommes de terre, ou une combinaison de ceux-ci.

3. Procédé selon la revendication 1, dans lequel ledit yaourt inclut du gras et au moins 20 % en poids du gras sont remplacés par l'amidon modifié.

4. Procédé selon la revendication 1, dans lequel jusqu'à 100 % en poids du gras dans ledit yaourt sont remplacés par de l'amidon modifié.

5. Composition comprenant un yaourt à teneur réduite en gras et un amidon qui est partiellement oxydé avec de l'hypochlorite et modifié par réaction avec de l'anhydride n-octényl-succinique à une substitution maximale de 3 %, et dans lequel les molécules d'amidon modifiées à l'anhydride n-octényl-succinique conservent leur nature ramifiée et forment des granules qui font 10 à 100 microns de diamètre, dans lequel la composition comprend de 0 à 20 % en poids de gras.

6. Composition selon la revendication 5, dans lequel l'amidon modifié comprend de l'amidon de tapioca, de l'amidon de maïs, de l'amidon de pommes de terre, ou une combinaison de ceux-ci

7. Composition selon la revendication 5, dans lequel la composition comprend de 0 à 10 % en poids de gras et de 0,01 à 10 % en poids d'amidon de tapioca modifié.
